# EUROPÄISCHE PATENTSCHRIFT

(11) **EP 1 376 894 B1**
(45) Veröffentlichungstag und Bekanntmachung des Hinweises auf die Patenterteilung: **16.01.2008**
(21) Anmeldenummer: 02013828.5
(22) Anmeldetag: 21.06.2002
(51) Int. Cl.: H04B 7/06, H04Q 7/38

(54) **Positionsbestimmung eines Nutzers in einem Funkkommunikationssystem mit sendeseitiger Diversity**
Positioning a user in a mobile communication system using transmit diversity
Positionnement d'un utilisateur dans un système de télécommunication sans fil utilisant la transmission en diversité

(43) Veröffentlichungstag der Anmeldung: 02.01.2004
(73) Patentinhaber: Nokia Siemens Networks GmbH & Co. KG, 81541 München (DE)
(72) Erfinder: Faerber, Michael, 82515 Wolfratshausen (DE); Hofmann, Jürgen, 86504 Merching (DE); Sotek, Karel, 81669 München (DE)

(56) Entgegenhaltungen:
- WO-A-02/11315
- DE-A- 10 031 178
- US-A1- 2002 022 502
- HIRAMATSU K ET AL: "TRANSMIT DIVERSITY APPLIED ON THE CDMA/TDD CELLULAR SYSTEMS" VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY: IEEE, US, Bd. 2 OF 3. CONF. 51, 15. Mai 2000 (2000-05-15), Seiten 1170-1174, XP000968054 ISBN: 0-7803-5719-1

## Beschreibung

Die Erfindung betrifft ein Verfahren zur Datenübertragung in einem Funkkommunikationssystem, bei dem ein Teilnehmerdatensignal sendeseitig über mindestens zwei Antenneneinrichtungen abgestrahlt wird.

Bei Funkkommunikationssystemen werden zur Qualitätsverbesserung einer Datenübertragung sogenannte "Diversity-Verfahren", beispielsweise als "Space-Diversity-Verfahren" oder als "Polarisations-Diversity-Verfahren" bezeichnet, verwendet.

Bei einem sendeseitig verwendeten Space-Diversity-Verfahren gelangt ein abzustrahlendes trägerfrequentes Teilnehmerdatensignal als Nutzdatensignal an mindestens zwei Antenneneinrichtungen, die einen Abstand von mehrere Wellenlängen zueinander aufweisen und die gleich polarisiert sind.

Bei einem sendeseitig verwendeten Polarisations-Diversity-Verfahren gelangt das abzustrahlende Teilnehmersignal ebenfalls an mindestens zwei Antenneneinrichtungen, die jedoch unterschiedliche Polarisationen aufweisen. Typischerweise sind zwei Antenneneinrichtungen in einem gemeinsamen Antennengehäuse angeordnet.

Diversity-Verfahren sind sowohl sendeseitig als auch empfangsseitig verwendbar und dienen zur Verbesserung der Übertragungsqualität durch Verbesserung einer betrachteten Empfangssituation.

Bei Funkkommunikationssystemen, wie beispielsweise beim GSM-Mobilfunksystem oder beim GERAN-Mobilfunksystem, wird beispielsweise ein sendeseitiges Teilnehmersignal in zwei Teilsignale aufgeteilt, die dann über zwei "Carrier-Units" zur Abstrahlung an zwei räumlich getrennte, gleichpolarisierte Antenneneinrichtungen gelangen. Da die Carrier-Units bauartbedingte Toleranzen in den jeweiligen Signalpfaden der Teilsignale aufweisen, gelangen die beiden Teilsignale mit unterschiedlichen Signallaufzeiten zur Abstrahlung. Zusätzlich ergeben sich für jedes einzelne Teilsignal im Funkfeld durch Mehrwegeausbreitung spezifische Ausbreitungspfade mit unterschiedlichen Signallaufzeiten und Signaldämpfungen.

Empfangsseitig erfolgt eine Überlagerung der einzelnen Teilsignale zum Teilnehmersignal, wobei systemtechnisch ein sogenannter "Diversity-Gewinn" erzielt wird. Über den Diversity-Gewinn ist wiederum eine Funkzellenvergrößerung bzw. eine Reichweitenvergrößerung zwischen Sender und Empfänger erzielbar.

Beim Empfänger wiederum sind die unterschiedlichen Ausbreitungspfade entsprechend zu berücksichtigen, was eine erhöhte Komplexität beim Empfänger bedeutet.

Bei Mobilfunksystemen, wie beispielsweise beim GSM-Mobilfunksystem, wird bei einer Datenübertragung zwischen einem mobilen Teilnehmer und einer Basisstation eine Positionsbestimmung (Location Service) des Teilnehmers, beispielsweise mit Hilfe des sogenannten Timing-Advance-Mechanismus, TA", durchgeführt. Dabei werden Signallaufzeiten eines Referenzsignals bei der Datenübertragung zwischen Teilnehmer und Basisstation bestimmt und mit deren Hilfe die Position des Teilnehmers ermittelt.

Ungenauigkeiten bei der Positionsbestimmung sind direkt auf Ungenauigkeiten bei der Bestimmung der Signallaufzeit des Referenzsignals zurückzuführen.

Beim GSM-Mobilfunksystem sind mit Hilfe des TA-Mechanismus Positionsbestimmungen mit einer Genauigkeit von ca. 200 Metern realisierbar, wobei neben dem TA-Mechanismus zur Positionsbestimmung noch weitere standardisierten Verfahren wie Assisted-GPS (A-GPS), Enhanced-Observed-Time-Difference (E-OTD) bzw. Cell-ID-Timing-Advance (CITA) bekannt sind.

Eine Positionsbestimmung ist mit einer erforderlichen Genauigkeit bei einem sendeseitig durchgeführten Diversity-Verfahren nur unter großem Aufwand bzw. nicht mehr durchführbar, bedingt durch die Mehrwegeausbreitung und durch die unterschiedlichen Signallaufzeiten in den jeweiligen Carrier-Units.

Für laufzeitabhängige bzw. laufzeitkritische Systemparameter oder Systemeigenschaften bei der Datenübertragung, beispielsweise bei einem "Synchronised-Handover" bzw. bei einem "Pseudo-Synchronised-Handover", treten entsprechende Probleme auf.

Aus WO 02/11315 A2 ist ein so genanntes hybrides Transmit-Diversity-Verfahren zur Übertragung von benachbarten, aufeinanderfolgenden Zeitschlitzen bekannt. Dabei erfolgt eine Informationsübertragung von einer Basisstation zu einem "mobile terminal" X während eines ersten Zeitschlitzes mit Hilfe eines so genannten "delay diversity"-Verfahrens, während eine Informationsübertragung zu einem weiteren "mobile terminal" Y mit Hilfe eines so genannten "Space-Time-Diversity"-Verfahrens erfolgt.

Aus US 2002/0022502 A1 ist eine Basisstation mit mehreren Sendeantennen bekannt. Dabei erfolgt eine Übertragung eines unidirektionalen Kanals entweder durch eine erste Antenne oder durch eine zweite Antenne. Das Umschalten zwischen den beiden Antennen erfolgt mit Hilfe einer vorbestimmten Zufallsauswahl.

Aus "Transmit Diversity Applied on the CDMA/TDD Cellular Systems", Hiramatsu et al, VTC 2000-Spring. 2000 IEEE 51st Vehicular Technology Conference Proceedings, Tokyo, Japan, May 15-18, 2000, Bd. 2 OF3, Seiten 1170-1174, XP000968054, sind verschiedene Transmit-Diversity-Verfahren für ein CDMA-TDD Funkkommunikationssystem bekannt. Dabei wird beilspielsweise der Physical Synchronization Channel PSCH mittels eines "Time Switched Transmit Diversity"-Verfahrens übertragen, bei dem abwechselnd aufeinanderfolgend der PSCH über zwei Antennen abgestrahlt wird. Der Primary-Common-Control-Channel P-CCPCH wird mittels eines "Block-Space-Time-Transmit-Diversity"-Verfahrens übertragen, bei dem der P-CCPCH gleichzeitig zwei Antennenzweigen zugeführt, wobei in jedem Antennenzweig eine eigene Kodierung erfolgt und die in ihrer Kodierung unterschiedlichen Signale über zwei Antennen gleichzeitig abgestrahlt werden. Der Dedicated Physical Channel DPCH wird mittels eines "Selective Transmit-Diversity and Transmit Adaptive Antennas" -Verfahrens übertragen, bei dem der DPCH mit unterschiedlicher Gewichtung gleichzeitig über zwei Antennen abgestrahlt wird.

Aus DE 100 31 178 A1 ist ein Positionsbestimmungsverfahren eines Teilnehmergeräts in einem Funkkommunikationssystem bekannt. Bei diesem Verfahren wird unterschieden zwischen zeitkritischen Daten einerseits und zeitunkritischen Daten andererseits, wobei die zeitkritischen Daten während eines zeitkritischen Fensters übertragen werden und die zeitunkritischen Daten während eines zeitunkritischen Fensters übermittelt werden. Zur Positionsbestimmung erforderliche Messsignale werden während der zeitunkritischen Fenster übermittelt,: um die Übertragung zeitkritischer nicht zu beeinträchtigen.

Die Aufgabe der vorliegenden Erfindung ist es, ein Verfahren für eine Datenübertragung in einem Funkkommunikationssystem derart zu realisieren, dass Vorteile eines sendeseitig eingesetzten Diversity-Verfahrens unter weitgehender Vermeidung von durch Mehrwegeausbreitung bedingten Nachteilen nutzbar sind.

Die Aufgabe der Erfindung wird durch die Merkmale des Anspruchs 1 gelöst. Vorteilhafte Weiterbildungen sind in den Unteransprüchen angegeben.

Durch das erfindungsgemäße Verfahren sind in einem Funkkommunikationssystem mit sendeseitigem Diversity-Verfahren laufzeitkritische Systemparameter, beispielsweise für eine Positionsbestimmung, unter Verwendung des Referenzsignals ausreichend genau ermittelbar.

Besonders vorteilhaft wird die Funkzellengröße bzw. die versorgungsreichweite für alle einer Funkzelle zugeordneten Teilnehmer während der Ermittlung der laufzeitkritischen Systemparameter beibehalten, da die Teilnehmerdaten als Nutzda-ten weiterhin über mindestens zwei der Antenneneinrichtungen sendeseitig abgestrahlt werden.

Für die Ermittlung von genau zu bestimmenden Signallaufzeiten für die laufzeitkritischen Systemparameter wird das Referenzsignal verwendet.

Bei Funkkommunikationssystemen mit Zeitschlitz-Vielfachzugriffsverfahren, bei denen die einzelnen Teilnehmersignale in Zeitschlitzen aufgeteilt in periodisch wiederkehrenden Rahmen übertragen werden, wird beispielsweise nur bei jedem n-ten Rahmen eine erfindungsgemäße Referenzsignalübertragung durchgeführt. Dadurch werden Übertragungsressourcen eingespart.

Zwar würde mit n=1 bei einer in jedem Rahmen erfolgenden Referenzsignalübertragung zu einem betrachteten Teilnehmer beispielsweise eine Positionsbestimmung sehr genau werden, jedoch würde durch ständigen Verlust des Diversity-Gewinns eine zuverlässige Funkversorgung des Teilnehmers unsicher werden.

Wird eine Positionsbestimmung anhand eines Timing-Advance-Mechanismus durchgeführt, so gelangt das Referenzsignal über ausschließlich eine Antenneneinrichtung zur Abstrahlung, wodurch beim Empfänger Mehrdeutigkeiten bei der Signallaufzeitmessung des Referenzsignals vermindert werden.

Erfindungsgemäß wird bei Funkkommunikationssystemen mit Zeitschlitz-Vielfachzugriffsverfahren das Referenzsignal in einem Zeitschlitz übertragen, wobei dieser Zeitschlitz bzw. der zur Übertragung verwendete Burst für jeden Funkkommunikationsendgerätehersteller spezifisch festgelegt sein kann.

Um für verschiedene Hersteller herstellerspezifische Referenzsignale an der entsprechenden Zeitschlitzposition übertragen zu können, sind die Referenzsignale sendeseitig - beispielsweise bei der Basisstation - herstellerspezifisch in einer Tabelle hinterlegt und abrufbar. Dadurch wird ermöglicht, dass Endgeräte verschiedener Hersteller im Funkkommunikationssystem eines Netzbetreibers betrieben werden können.

Erfindungsgemäß erfolgt eine Positionsbestimmung periodisch oder in zufällig gewählten Zeitabständen.

Das Referenzsignal wird beim GSM-Mobilfunksystem bzw. beim GERAN-Mobilfunksystem bevorzugt mit Hilfe des sogenannten SCCH-Kanals übertragen, der in jedem zehnten Rahmen wiederholt wird. Als Referenzsignal wird erfindungsgemäß eine verlängerte Trainingssequenz eines zur Synchronisation dienenden SCH-Zeitschlitzes verwendet.

Ein zur Synchronisation dienende Zeitschlitz dient mobilen Endgeräten von Nachbarzellen zum sogenannten "Monitoring", wobei im IDLE-Frame ein Nachbarzellen-Endgerät die Nutzinformationen des SCH-Kanals dekodiert. Durch den darin enthaltenen Betreibercode erkennt das Nachbarzellen-Endgerät, ob es auf die zugehörige Zelle des SCH-Kanals zugreifen darf oder nicht. Durch das erfindungsgemäße periodische Abschalten des sendeseitigen Diversity-Verfahrens in nur jedem n-ten Rahmen wird gewährleistet, dass Nachbarzellen-Endgeräte den Versorgungsbereich der dem SCH-Kanal zugeordneten Zelle entsprechend beobachten können.

Erfindungsgemäß wird dann beispielsweise bei jedem hundertsten Rahmen eine Positionsbestimmung mit Hilfe einer sogenannten "Location-Measurement-Unit, LMU" durchgeführt, die bereits jetzt üblicherweise bei jeder Basisstation als Baugruppe verfügbar ist. Die LMU weist als zusätzliche Funktion ein a priori Wissen über die zur Positionsbestimmung zu verwendenden Rahmen bzw. deren Rahmennummern auf. Ein Kommunikationsendgerät eines Teilnehmers bestimmt Laufzeiten des Referenzsignals und meldet diese zur Basisstation zurück, wobei durch wiederholte Messungen Toleranzen bei der Positionsbestimmung reduziert werden.

In einer vorteilhaften Ausgestaltung der Erfindung wird das Referenzsignal eines Teilnehmers wechselweise über die mindestens zwei Antenneneinrichtungen abgestrahlt und es erfolgt eine empfangsseitige Bewertung der gemessenen Referenzsignallaufzeiten für jede verwendete Antenneneinrichtung. Die geringste Referenzsignallaufzeit entspricht am besten dem sogenannten "line of sight"-Ausbreitungspfad. Für weiter durchzuführende Positionsbestimmungen wird die derart ermittelte Antenneneinrichtung zur Abstrahlung des Referenzsignals bevorzugt verwendet.

Werden mehr als zwei Antenneneinrichtungen zur Abstrahlung verwendet, steigt die Wahrscheinlichkeit an, den Line-Of-Sight-Ausbreitungspfad zu detektieren, wodurch eine Steigerung der Genauigkeit bei der Positionsbestimmung ermöglicht wird.

Zur Überprüfung der Genauigkeit der Positionsbestimmung erfolgt von Zeit zu Zeit ein Wechseln der Antenneneinrichtungen zur Referenzsignal-Abstrahlung mit nachfolgender Laufzeit-Bewertung.

Im Folgenden wird ein Ausführungsbeispiel der Erfindung anhand einer Zeichnung näher erläutert. Dabei zeigt:

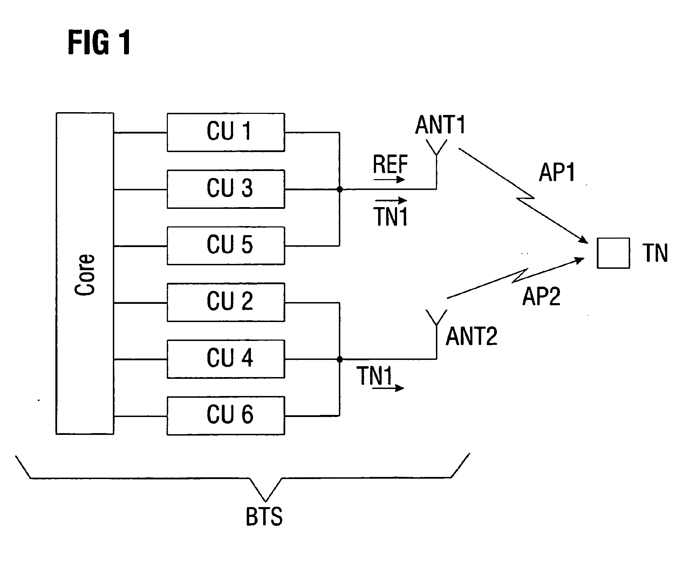

- FIG 1: ein Funkkommunikationssystem zur Durchführung des erfindungsgemäßen Verfahrens.

FIG 1 zeigt ein Funkkommunikationssystem zur Durchführung des erfindungsgemäßen Verfahrens. Eine Basisstation BTS beinhaltet zur Übertragung von Teilnehmersignalen sechs Carrier-Units CU1 bis CU6, die zu übertragende Teilnehmersignale über ein Netzwerk Core erhalten.

Ein Teilnehmerdatensignal TN1, das einem ersten Teilnehmer TN zugeordnet ist, gelangt zur Abstrahlung an zwei Antennen ANT1 und ANT2, mit deren Hilfe ein sendeseitiges Diversity-Verfahren realisiert ist. Ein Referenzsignal REF, das dem ersten Teilnehmer TN ebenfalls zugeordnet ist, wird hingegen erfindungsgemäß nur über eine erste Antenne ANT1 abgestrahlt.

Das Teilnehmerdatensignal TN1 und das Referenzsignal REF, die von der ersten Antenne ANT1 abgestrahlt werden, gelangen über einen Ausbreitungspfad AP1 zum Teilnehmer TN, während das Teilnehmerdatensignal TN1, das von einer zweiten Antenne ANT2 abgestrahlt wird, über einen Ausbreitungspfad AP2 zum Teilnehmer TN gelangt.

Wird bei einem GSM-Mobilfunksystem das Referenzsignal REF mit Hilfe eines SCH-Synchronisationskanals übertragen, so wird das Referenzsignal REF wechselweise durch die beiden Antennen ANT1 bzw. ANT2 wie folgt abgestrahlt:
- bei allen geraden TDMA-Rahmen über die erste Antenne ANT1 und
- bei allen ungeraden TDMA-Rahmen über die zweite Antenne ANT2.

Ein BSS-SMLC ordnet dann Signallaufzeitmessungen an, die auf den Referenzsignalen REF der geraden oder ungeraden TDMA-Rahmen basieren. Damit sind sowohl bei der Local-Measurement-Unit LMU als auch beim mobilen Teilnehmer TN das durch die BSS-SMLC signalisierte Zeitmultiplex bekannt.

Das BSS-SMLC wertet dann die Signallaufzeiten für die jeweiligen Ausbreitungspfade AP1 und AP2 aus und selektiert für spätere Positionsbestimmungen denjenigen Ausbreitungspfad, der mit einer geringen Signallaufzeit einem direkten Ausbreitungspfad (Line-Of-Sight-Kriterium) am besten entspricht.

## Patentansprüche

1. Verfahren zur Datenübertragung in einem Funkkommunikationssystem,
- bei dem ein einem Teilnehmer zugeordnetes Teilnehmerdatensignal über mindestens zwei Antenneneinrichtungen im Rahmen eines Diversity-Verfahrens abgestrahlt wird,
- beidem ein dem Teilnehmer zugeordnetes Referenzsignal, das ausschließlich über eine der mindestens zwei Antenneneinrichtungen abgestrahlt wird, zur Bestimmung laufzeitkritischer Systemparameter für eine auf einer Signallaufzeitmessung beruhenden Positionsbestimmung des Teilnehmers verwendet wird.

2. Verfahren nach Anspruch 1, bei dem das Referenzsignal in vorgegebenen Zeitabständen periodisch oder in zufällig gewählten Zeitabständen unperiodisch abgestrahlt wird.

3. Verfahren nach Anspruch 1 oder 2, bei dem das Referenzsignal wechselweise über je eine der mindestens zwei Antenneneinrichtungen gesendet wird.

4. Verfahren nach Anspruch 3, bei dem eine empfangsseitige Bewertung der gemessenen Signallaufzeiten des wechselweise gesendeten Referenzsignals erfolgt und für weitere Positionsbestimmungen diejenige Antenneneinrichtung zur Abstrahlung des Referenzsignals ausgewählt wird, deren Ausbreitungspfad mit einer geringsten Signallaufzeit einem direkten Ausbreitungspfad als Line-Of-Sight-Kriterium entspricht.

5. Verfahren nach Anspruch 1 oder 4, bei dem die Positionsbestimmung mit Hilfe des Timing-Advance-Mechanismus durchgeführt wird.

6. Verfahren nach einem der vorhergehenden Ansprüche, bei dem das Teilnehmerdatensignal und das Referenzsignal mit Hilfe eines Zeitschlitz-Vielfachzugriffsverfahrens übertragen wird.

7. Verfahren nach Anspruch 6, bei dem als Referenzsignal eine Trainingssequenz eines zur Synchronisation dienenden zeitschlitzes verwendet wird.

8. Verfahren nach Anspruch 7, bei dem bei einem GSM-Mobilfunksystem als Referenzsignal eine verlängerte Trainingssequenz des SCH-Zeitschlitzes verwendet wird.

9. Verfahren nach einem der vorhergehenden Ansprüche, bei dem sendeseitig Referenzsignale herstellerspezifisch in einer Tabelle abgelegt werden.

10. Verfahren nach einem der vorhergehenden Ansprüche, bei dem mindestens zwei Antenneneinrichtungen mit zueinander orthogonalen Polarisationen oder mindestens zwei polarisationsgleiche Antenneneinrichtungen, die einen festen Abstand zueinander aufweisen, verwendet werden.

## Claims

1. Method for data transmission in a radio communication system,
- wherein a subscriber data signal assigned to a subscriber is transmitted via at least two antenna devices using a diversity method,
- wherein a reference signal assigned to the subscriber and transmitted exclusively via one of the at least two antenna devices is used for determining runtime-critical system parameters for a position determination of the subscriber based on a signal propagation delay measurement.

2. Method according to claim 1, wherein the reference signal is transmitted periodically at predefined time intervals or aperiodically at randomly selected time intervals.

3. Method according to claim 1 or 2, wherein the reference signal is transmitted alternately via one of the at least two antenna devices in each case.

4. Method according to claim 3, wherein the measured propagation delays of the alternately transmitted reference signal are evaluated on the receive side and for further position determinations the antenna device chosen to transmit the reference signal is the one whose propagation path corresponds with a smallest signal propagation delay to a direct propagation path as a line-of-sight criterion.

5. Method according to claim 1 or 4, wherein the position determination is performed with the aid of the timing advance mechanism.

6. Method according to one of the preceding claims, wherein the subscriber data signal and the reference signal are transmitted using a time division multiple access method.

7. Method according to claim 6, wherein a training sequence of a time slot serving for synchronisation is used as the reference signal.

8. Method according to claim 7, wherein an extended training sequence of the SCH time slot is used as the reference signal in a GSM mobile radio system.

9. Method according to one of the preceding claims, wherein reference signals are stored in a table on the transmit side on a manufacturer-specific basis.

10. Method according to one of the preceding claims, wherein at least two antenna devices having polarisations that are orthogonal to one another or at least two antenna devices having the same polarisation and being at a fixed distance from one another are used.

## Revendications

1. Procédé de transmission de données dans un système de radiocommunication, dans lequel
- un signal de données d'usager associé à un usager est émis via au moins deux dispositifs d'antenne dans le cadre d'un procédé de diversité,
- un signal de référence affecté à l'usager, lequel signal est émis exclusivement via l'un des au moins deux dispositifs d'antenne, est utilisé pour déterminer des paramètres système critiques au regard du temps de propagation pour une détermination de position de l'usager reposant sur une mesure du temps de propagation du signal.

2. Procédé selon la revendication 1, dans lequel le signal de référence est émis périodiquement à intervalles de temps prédéterminés ou non périodiquement à intervalles de temps choisis aléatoirement.

3. Procédé selon la revendication 1 ou 2, dans lequel le signal de référence est émis en alternance via respectivement l'un des au moins deux dispositifs d'antenne.

4. Procédé selon la revendication 3, dans lequel il y a évaluation, côté récepteur, des temps de propagation mesurés du signal de référence émis en alternance et est choisi, pour d'autres déterminations de position, pour émettre le signal de référence, le dispositif d'antenne dont le chemin de propagation, avec un temps de propagation de signal le plus faible, correspond à un chemin de propagation direct en tant que critère de la ligne de vue (Line-Of-Sight).

5. Procédé selon la revendication 1 ou 4, dans lequel la détermination de position est effectuée à l'aide du mécanisme d'avance temporelle.

6. Procédé selon l'une des revendications précédentes, dans lequel le signal de données d'usager et le signal de référence sont transmis à l'aide d'un procédé d'accès multiple par créneau temporel.

7. Procédé selon la revendication 6, dans lequel est utilisée, en tant que signal de référence, une séquence d'apprentissage d'un créneau temporel servant à la synchronisation.

8. Procédé selon la revendication 7, dans lequel est utilisée en tant que signal de référence, dans le cas d'un système radio mobile GSM, une séquence d'apprentissage prolongée du créneau temporel SCH.

9. Procédé selon l'une des revendications précédentes, dans lequel des signaux de référence sont, côté émetteur, déposés dans une table de manière spécifique aux fabricants.

10. Procédé selon l'une des revendications précédentes, dans lequel sont utilisés au moins deux dispositifs d'antenne avec des polarisations orthogonales entre elles ou au moins deux dispositifs d'antenne de même polarisation qui sont à distance fixe l'un de l'autre.
